(19)

Europäisches
Patentamt
European
Patent Office
Office européen
des brevets

(11) **EP 1 852 713 A1**

(12) **EUROPEAN PATENT APPLICATION**
published in accordance with Art. 158(3) EPC

(43) Date of publication:
**07.11.2007 Bulletin 2007/45**

(21) Application number: **06714306.5**

(22) Date of filing: **22.02.2006**

(51) Int Cl.:
***G01S 13/93*** (2006.01)      ***B60R 21/00*** (2006.01)
***G01B 21/20*** (2006.01)

(86) International application number:
**PCT/JP2006/303166**

(87) International publication number:
**WO 2006/090736 (31.08.2006 Gazette 2006/35)**

(84) Designated Contracting States:
**DE FR GB**

(30) Priority: **23.02.2005 JP 2005047518**

(71) Applicant: **AISIN SEIKI KABUSHIKI KAISHA
Kariya-shi, Aichi 448-8650 (JP)**

(72) Inventors:
• **KAKINAMI, Toshiaki, AISIN SEIKI K. K.
Kariya-shi, Aichi 448-8650 (JP)**

• **SATO, Jun, c/o Aisin Seiki KK
Kariya-shi, Aichi 448-8650 (JP)**

(74) Representative: **Kramer - Barske - Schmidtchen
European Patent Attorneys
Patenta
Radeckestrasse 43
81245 München (DE)**

(54) **OBJECT RECOGNIZING DEVICE**

(57)    An object recognition apparatus that is capable of consistently recognizing the shape of an object in the periphery of a moving body using a small amount of computation even when data for an extraneous object are introduced, and of calculating the positional relationship of both objects and satisfactorily reporting the positional relationship. The object recognition apparatus for recognizing an object in the periphery of a moving object is configured as described below. The object recognition apparatus comprises object detection means (1) for detecting information about the surface shape of the object; shape recognition means (2) for computing a degree of coincidence of a sample group with respect to a shape model that is determined on the basis of a sample arbitrarily extracted from a sample group composed of information about the surface shape, and recognizing a profile shape of the object; relative positioning computation means (3) for computing a positional relationship between the moving body and the object on the basis of detection and recognition results of the object detection means (1) and the shape recognition means (2); and reporting means (5) for reporting the positional relationship using a sound or a display on the basis of computation results of the relative positioning computation means (3).

Fig.2

EP 1 852 713 A1

## Description

## TECHNICAL FIELD

The present invention relates to an object recognition apparatus for recognizing the profile shape of an object in the periphery of a moving body, calculating the positional relationship between the moving body and the object, and visually or audibly reporting the positional relationship.

## BACKGROUND ART

The obstacle detection apparatus described in Patent Document 1 cited below is an example of such an apparatus. This apparatus detects the presence of an obstacle in the periphery of a vehicle (moving body) and issues a warning. This apparatus was developed as an improvement on the conventional apparatus, which is configured so as to measure only the distance between the vehicle and the obstacle, and issue a warning only when the measured distance is less than a prescribed distance. The apparatus described in Patent Document 1 was developed in view of the drawbacks inherent in the fact that a warning based merely on distance makes it difficult for the driver to understand which of the surrounding objects is an obstacle to the vehicle. A plurality of obstacle detection sensors was therefore mounted on the vehicle to compute the distance to the obstacle. The computation results thus obtained are used to estimate whether the shape of the obstacle is linear (planar shape) or round (convex shape), and the shape is displayed. According to this configuration, the distance to the obstacle and the shape of the obstacle are used to create the notification.

[Patent Document 1] Japanese Laid-open Patent Application No. 2003-194938 (pp. 2-3, FIGS. 1-7)

## DISCLOSURE OF THE INVENTION

## Problems That the Invention Is Intended to Solve

The publicly known technique described above is advantageous to the user in that the shape of the obstacle can be estimated. However, detection data from objects (obstacles) other than the object intended for detection are often introduced in the actual measurement. Since detection data for such extraneous objects act as noise components, these data can cause errors in estimating the shape of the detection object. Specifically, safety cannot be considered adequate when detecting obstacles and other detection objects. Providing functionality for removing such noise generally increases the amount of computation, and is accompanied by increased processing time and increased size of the apparatus.

The present invention was developed in view of the abovementioned problems, and an object of the present invention is to provide an object recognition apparatus that is capable of consistently recognizing the shape of an object in the periphery of a moving body using a small amount of computation even when data for an extraneous object are introduced, and of calculating the positional relationship of both objects and satisfactorily reporting the positional relationship.

## Means for Solving the Problems

Aimed at achieving the abovementioned objects, the object recognition apparatus for recognizing an object in the periphery of a moving body according to the present invention is characterized in comprising the constituent elements described below. Specifically, the object recognition apparatus comprises object detection means for detecting information about the surface shape of the object; shape recognition means for computing a degree of coincidence of a sample group with respect to a shape model that is determined on the basis of a sample arbitrarily extracted from a sample group composed of information about the surface shape, and recognizing a profile shape of the object; relative positioning computation means for computing a positional relationship between the moving body and the object on the basis of detection and recognition results of the object detection means and the shape recognition means; and reporting means for reporting the positional relationship using a sound or a display on the basis of computation results of the relative positioning computation means.

According to this characteristic configuration, the object detection means detects information about the surface shape of the object, and the shape recognition means recognizes the profile shape of the object on the basis of the information about the surface shape. The term "information about the surface shape" used herein refers to information indicating the shape of the surface of the object as viewed from the moving body. Reflection sensors that use radio waves, ultrasonic waves, or the like may be used, and image sensors and cameras (for moving images or static images) for obtaining image data using visible light, infrared light, or other light may also be used.

The shape recognition means recognizes a profile shape from a sample group obtained from the various types of object detection means described above. The term "sample group" used herein refers to the aggregate of individual data points constituting information about the surface shape. The individual data points are information that corresponds to locations obtained by receiving signals reflected at locations of an obstacle when, for example, a reflection sensor is used. When image data are used, it is possible to use data that are obtained by edge extraction, 3D conversion, and various other types of image processing. Data indicating the surface shape of an object are thus treated as samples independent of the type of shape recognition means, and the aggregate of the samples is referred to as the sample group.

The shape recognition means arbitrarily (randomly) extracts several samples from the sample group and establishes a shape model on the basis of the extracted samples. The shape model may be established through geometric computation from the extracted samples, or by using a method in which a plurality of templates is prepared in advance, and the data are fitted to the most appropriate template. The degree to which the entire sample group coincides with the shape model is then computed. The computation results are the basis for determining whether the realized shape model conforms to the sample group.

Specifically, when noise samples are included in the arbitrarily extracted samples, the degree of coincidence between the established shape model and the sample group is low. Accordingly, a determination can be made that this shape model does not conform to the sample group. The degree of coincidence increases when a shape model is established without including noise samples. Accordingly, a determination can be made that the shape model conforms to the sample group. Noise samples are thus removed, and the profile shape of a target object can be recognized by a small amount of computation.

The shape recognition means establishes a shape model from a number of arbitrarily extracted samples that is significantly less than the number of samples in the sample group. Accordingly, only a small amount of computation is needed for extracting the samples or establishing the shape model. The computation time is therefore reduced, and the apparatus does not increase in size. The degree of coincidence with the shape model can also be computed geometrically using coordinates in the sample spaces. The degree of coincidence can thus be computed using a small amount of computation. Since these computations are performed using a small amount of computation, the total amount of computation can be prevented from increasing even when different shape models are repeatedly established, and the degrees of coincidence are computed. As a result, the profile shape can be recognized with high precision.

As described above, the present invention makes it possible to consistently obtain the profile shape of a target object. When information about the surface shape is obtained, the distance or positional relationship between the object detection means and the object is also acquired as information. The position of the object detection means in the moving object is known, and the external shape of the moving object is also known. Accordingly, the recognized profile shape and other information can be used to compute the positional relationship between the locations of the moving body and the locations of the object. As a result, it can easily be known from the positional relationship which portion of the moving body is approaching which portion of the object. This positional relationship is also reported by a visual display or a sound. Accordingly, in addition to his or her own assumptions, the person operating or monitoring the moving body can know whether the moving body is approaching an object, and the relationship of the moving body to the object.

According to this characteristic configuration, the shape of an object in the periphery of a moving object can be consistently recognized even when data of objects other than the target object are introduced, and the positional relationship between the moving body and the object can be reported.

The object recognition apparatus of the present invention is characterized in that the object detection means detects information about the surface shape on the basis of a distance between the moving body and a surface of the object.

In such a case as when the profile shape of the target object is related to the distance from the moving body, e.g., a so-called depth, information about the surface shape is preferably detected based on the distance between the object and the moving body. In such a case, information about the surface shape detected based on distance is the sample group that substantially indicates the profile shape to be recognized when noise samples are not included. Even when noise samples are included in the sample group, the remaining sample group substantially indicates the profile shape to be recognized when the noise samples can be removed. In the present invention as described above, noise samples can be satisfactorily removed by the computation of the degree of coincidence between the shape model and the sample group. Accordingly, consistent and accurate object detection is made possible when the object detection means detects information about the surface shape on the basis of the distance between the moving object and the object surface.

The object recognition apparatus of the present invention is characterized in that information about the surface shape is obtained in discrete fashion in conformity with an external shape of the object.

It is thus preferred that information about the surface shape (information indicating the profile shape of the object) be obtained in discrete fashion in conformity with an external shape of the object.

The object targeted for recognition is not limited to a wall or other flat object, and may sometimes be an object that has a level difference. A level difference is a step or the like between the bumper part and the front or the rear window part of a vehicle. The external profile is the shape of the outside including such level differences of the object, i.e., the surface shape that indicates the external shape. When the object and the object detection means are at the closest possible distance, i.e., only the part of the object that protrudes' toward the object detection means can be detected, only the bumper part or the lowest step is detected.

However, a portion of the moving body that protrudes toward the object does not necessarily coincide with the portion of the object that protrudes toward the moving body. The person using (monitoring) the moving body preferably operates or monitors the apparatus so that the portion of the moving body and the portion of the object are not too close to each other. Accordingly, the profile shape to be recognized in some cases is not limited to a bumper part, and can also be a window part when the object is a vehicle. The same applies when the object to be recognized is a step or the like.

It is therefore preferred that various locations on the target object be used as information about the surface shape, and not merely the portion of the object that protrudes furthest towards the moving body. According to the application, profile shapes for various locations are preferably recognized by obtaining information about the surface shape that indicates the external profile of the target object.

In order to store data conforming to an external shape in the form of continuous data or the like, a large storage area is needed, and the signal processing is also difficult. However, when the data are discrete, as in the present characteristic configuration, some sampling periods can be skipped to reduce the amount of data. As a result, the speed of signal processing can also be increased.

The object recognition apparatus of the present invention is also characterized in that a number of the samples that is in accordance with a target shape to be recognized is arbitrarily extracted from the sample group constituting information about the surface shape.

In this characteristic configuration, extracting a number of samples that is in accordance with the target shape to be recognized allows a shape model to be efficiently established.

The object recognition apparatus of the present invention is also characterized in that the target shape is a shape of a vehicle bumper approximated by a quadratic curve, and five of the samples are arbitrarily extracted.

According to this characteristic configuration, a shape model can be established by performing a simple computation using a quadratic curve to approximate the shape of a vehicle bumper.

The object recognition apparatus of the present invention is also characterized in that a space between two curves that link points that are separated by a prescribed distance in both directions orthogonal to a tangent line of the shape model is defined as an effective range, and the shape recognition means computes the degree of coincidence using a relationship between a number of the samples included in the effective range and a total number of samples in the sample group.

According to this characteristic configuration, the effective range can be correctly specified by two curves that are equidistant from the shape model. As a result, the shape recognition means can compute the degree of coincidence using the same conditions with respect to each specified shape model, and the degree of coincidence can be compared correctly.

The object recognition apparatus of the present invention is also characterized in that the shape recognition means performs recognition as described below.

Specifically, the shape recognition means extracts the arbitrary sample from the sample group a prescribed number of times and computes the degree of coincidence with respect to each determined shape model. After extraction is repeated the prescribed number of times, the shape recognition means recognizes the shape model having a maximum the degree of coincidence as a profile shape of the object among the shape models for which a prescribed threshold value is exceeded.

According to this characteristic configuration, the shape model having the highest degree of coincidence among shape models established a plurality of times can be recognized as the profile shape, and precise recognition is therefore possible.

The object recognition apparatus of the present invention is also characterized in that the shape recognition means first recognizes the shape model having the degree of coincidence that exceeds the prescribed threshold value as a profile shape of the object without consideration for the prescribed number of times.

According to this characteristic configuration, a shape model whose degree of coincidence exceeds a prescribed threshold value is first used as the recognition result without consideration for the prescribed number of times, and rapid recognition is therefore possible.

The object recognition apparatus of the present invention is characterized in that the relative positioning computation means computes the positional relationship on the basis of detection results of movement state detection means for detecting a movement state of the moving body; and determination means are provided for determining a degree of approach of the moving body and the object on the basis of the positional relationship.

When the movement state of the moving body is detected by the movement state detection means, it is possible to estimate the position of the moving body in the near future. Accordingly, not only the current positional relationship, but also the future positional relationship between the object and the moving body can be computed based on the detection results of the movement state detection means. The degree to which portions of the object and the moving body approach each other is already known from the positional relationship between the object and the moving body, and the change in this degree of approach can therefore be computed from the movement of the moving body. As a result, it is possible to predict the degree to which portions of the moving body and the object approach each other. When this degree of approach is determined, rapid response is possible when, for example, the moving body and the object are too close to each other.

The object recognition apparatus of the present invention is also characterized in further comprising movement control means for controlling one or both parameters selected from a movement speed and a rotation direction of the moving body on the basis of the degree of approach determined by the determination means.

When the degree of approach is determined as previously described, a rapid response can be obtained in such a case as when the moving body and the object are too close to each other, for example. In this response, one or both parameters selected from the movement speed and the rotation direction of the moving body is/are preferably controlled as described above. Specifically, the approach speed of a moving body that allows the body to approach an object too closely can be reduced, or the approach can be stopped by controlling the movement speed. By controlling the rotation speed, the direction of movement can be changed so that the moving body does not approach the object.

The object recognition apparatus of the present invention is also characterized in that the object detection means detects the information about the surface shape of the object in conjunction with movement of the moving body.

When a configuration is adopted in which the information about the surface shape of the object is detected in conjunction with the movement of the moving body, the object is detected in conjunction with the movement direction of the moving body, and efficient detection is possible. The object detection means may also be composed, for example, of a fixed sensor (e.g., a single-beam sensor) that is oriented in one direction. Specifically, a wide range can be scanned through the movement of the moving body even when the object detection means can detect in only one fixed direction.

The object recognition apparatus of the present invention is also characterized in that the object detection means comprises scanning means for scanning a wide-angle area in relation to the object without consideration for movement of the moving body, and the information about the surface shape of the object is detected based on obtained scanning information.

According to this onfiguration, a wide range can be scanned to detect an object even when the moving body is stopped. As a result, the presence of an object, and other aspects of the surrounding area can be taken into account when initiating movement of a body that is stopped, for example.

## BEST MODE FOR CARRYING OUT THE INVENTION

(First Embodiment)

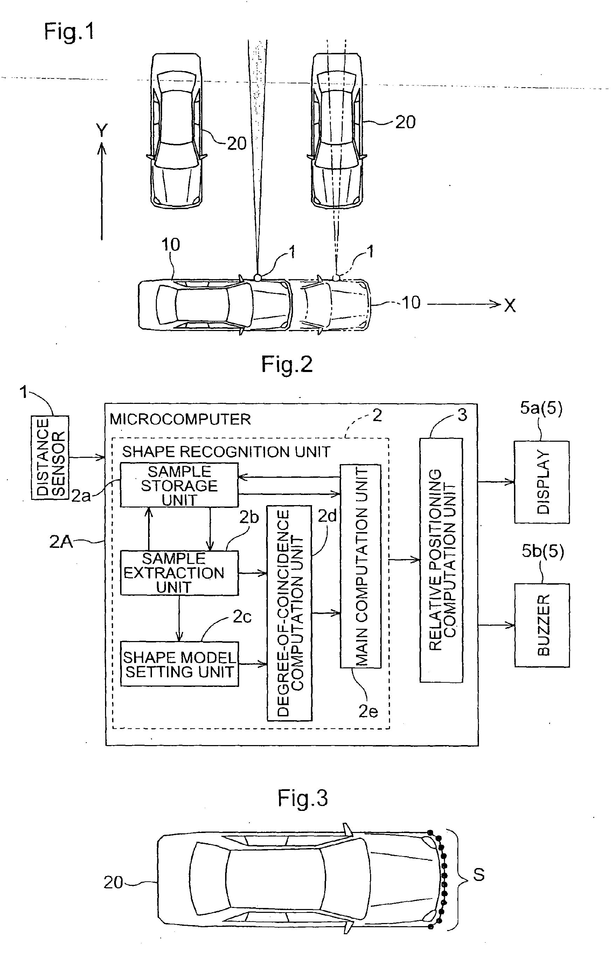

Preferred embodiments of the present invention will be described hereinafter based on the drawings, using an example in which a vehicle recognizes another vehicle. As shown in FIG. 1, a distance sensor 1 (object detection means) that faces to one side is mounted on a vehicle 10, which is the moving body. The distance sensor 1 is a point sensor, for example, i.e., a single-beam sensor, or a sonar sensor or other sensor that uses ultrasonic waves. When the vehicle 10 travels in the X direction of the drawing near another vehicle 20 (hereinafter referred to as a parked vehicle) that is parked, the distance to the parked vehicle 20 is measured by the distance sensor 1. The parked vehicle 20 corresponds to the object in the present invention. For convenience in FIG. 1, a distance sensor 1 is provided to only the left side of the vehicle 10, but a distance sensor 1 may, of course, be provided to both sides.

The distance sensor 1 measures the distance to the parked vehicle 20 according to the movement of the vehicle 10. Information about the surface shape of the parked vehicle 20 obtained in this manner is discrete data that correspond to the movement distance of the vehicle 10. The meaning of the phrase "according to a prescribed time interval" is included in the phrase "according to the movement distance" of the vehicle 10. For example, when the vehicle 10 is moving at a constant speed, a measurement in accordance with the movement distance can be performed by measuring according to a prescribed time interval. The movement speed, movement distance, and movement time of the moving body 10 are linearly determined. Accordingly, any method may be used insofar as the result can be obtained as information about the surface shape in a substantially uniform manner. The vehicle 10 acquires the information about the surface shape of the object in this manner (object detection step).

The distance sensor 1 may be provided with a timer for measuring the movement time, an encoder for measuring the movement distance, and a rotation sensor or other associated sensor for measuring the movement speed. These sensors may be separately provided to obtain information.

FIG. 2 is a schematic block diagram showing the object recognition apparatus according to the first embodiment of the present invention. In FIG. 2, a shape recognition unit 2 (shape recognition means) is composed of a microcomputer 2A and other electronic circuits. The processing units within the shape recognition unit 2 do not necessarily represent different physical electronic circuits, and may also represent functions. For example, cases may be included in which different functions are obtained by executing different programs using the same CPU.

As shown in FIG. 2, information about the surface shape measured by the distance sensor 1 is inputted to the shape recognition unit 2. The inputted information about the surface shape is mapped in a two-dimensional plane whose axes are the X direction and the Y direction shown in FIG. 1, and the mapped information is stored in a sample storage unit 2a. This sample storage unit 2a is composed of memory. In the present embodiment, the sample storage unit 2a is housed inside the microcomputer 2A. Of course, a so-called external configuration may be adopted in which the memory used is separate from the microcomputer 2A. A register, a hard disk, or another storage medium may also be used, whether internal or external.

Besides the components described above, a relative positioning computation unit 3 (relative positioning computation means) is provided within the microcomputer 2A. Specifically, information about the surface shape of the parked vehicle 20 is acquired using the distance sensor 1 in order to recognize the profile shape of the parked vehicle 20 as viewed from the vehicle 10, as described above. Accordingly, information relating to the distance between the vehicle 10 and the parked vehicle 20 is simultaneously obtained. The relative positioning computation unit 3 uses the distance information and the profile shape to compute the positions of the vehicle 10 and the parked vehicle 20 relative to each other.

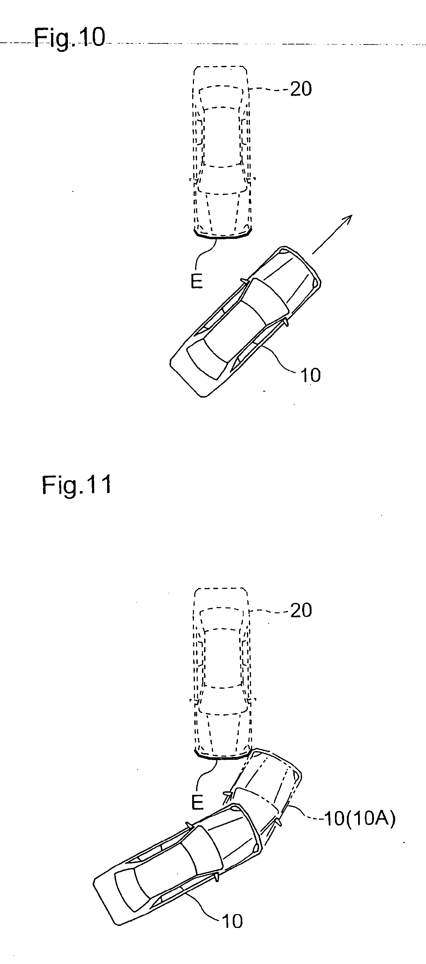

As used herein, the term "relative positioning" refers to the relative positioning of each part of the vehicle 10 and each part of the parked vehicle 20. The external shape of the vehicle 10 is the vehicle's own shape, and is therefore known. The profile shape of the parked vehicle 20 as viewed from the vehicle 10 can be satisfactorily recognized by the method described in detail below. The relative positioning of the vehicle 10 and the parked vehicle 20 as shown in FIG. 10 is thereby computed in the relative positioning computation unit 3. The entire parked vehicle 20 is indicated by dashed lines to facilitate understanding in FIG. 10, but in actual practice the relative positioning of the recognized profile shape E and the vehicle 10 is computed. Of course, all relative positions may be computed when another location is included and the corresponding profile shape E is recognized.

The relative positioning is displayed by a display 5a or other reporting means 5. A monitor of a navigation system or the like may also be used as the display 5a. When a display (report) is shown on the display 5a, the external shape of the vehicle 10 and the recognized profile shape E are displayed. Alternatively, the entire parked vehicle 20 may be indicated as an illustration on the basis of the profile shape E, and the positional relationship between the vehicle 10 and the parked vehicle 20 may be displayed.

The report is not limited to a visual display such as the one described above, and an audio (including sounds) report may also be issued. The sound may be created by a buzzer 5b, a chime, or the like. Voice guide functionality may also be provided to the navigation system. Accordingly, the voice guide function may be jointly used in the same manner as in the case of the monitor.

The object detection step, and the subsequent shape recognition step for recognizing the profile shape of an object, will be described in detail hereinafter.

The object detection step will first be described. As shown in FIG. 3, information about the surface shape S of the parked vehicle 20 is measured by the distance sensor 1. Information about the surface shape is composed of measurement data obtained in discrete fashion in a manner that follows the external shape of the bumper part of the parked vehicle 20 according to the present embodiment. The set of discretely obtained data is referred to herein as a sample group S (large S). The sample group S is a data set that is recognized as the profile shape. The individual data points constituting the data set are referred to as samples s (lower-case s).

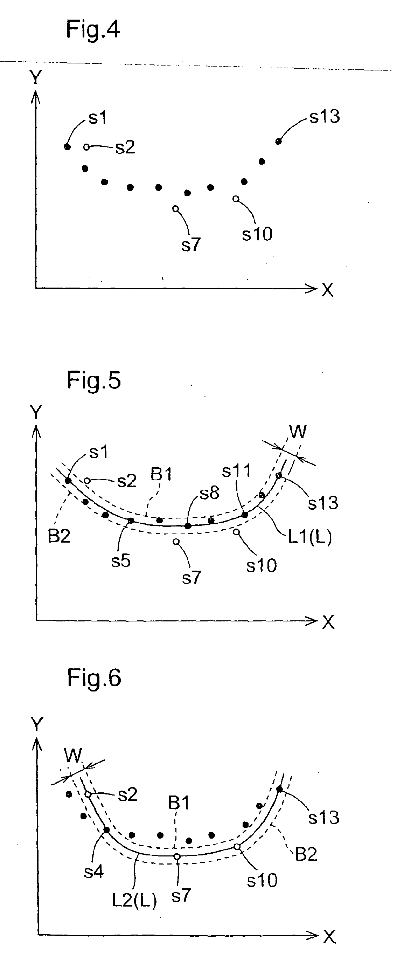

The sample group S is mapped onto two-dimensional orthogonal XY coordinates, as shown in FIG. 4, in the sample storage unit 2a. In order to facilitate the description, not all of the samples s are shown in the drawing. In the samples shown in FIG. 4, the samples s indicated by black points are referred to as inliers, and the samples s indicated by outline points are referred to as outliers. In the drawing, samples s1, s13, and other samples are inliers, and samples s2, s7, and s10 are outliers. A detailed description will be given hereinafter, but the inliers are the samples that form the profile shape of the parked vehicle 20. The outliers are so-called noise samples that are outside the profile shape of the parked vehicle 20.

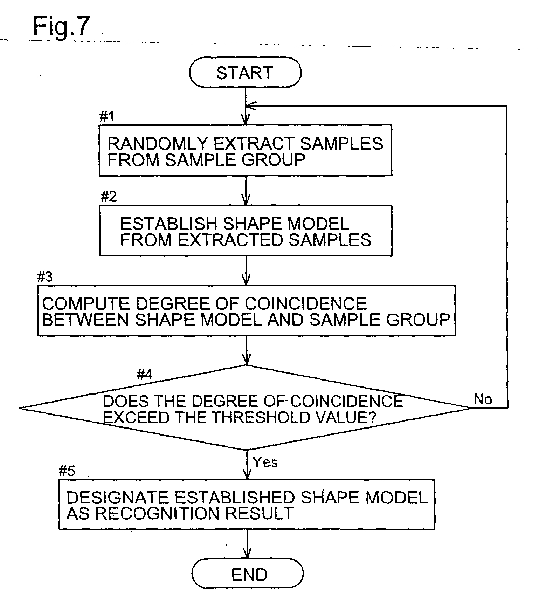

The flowchart shown in FIG. 7 will next be used to describe the procedure (shape recognition step) for recognizing the profile shape of the parked vehicle 20 from the obtained sample group S.

The sample extraction unit 2b extracts several arbitrary samples si (wherein i is a sample number) from the sample group S (samples s1 through s13) (sample extraction step; #1 of FIG. 7). The particular samples s extracted are randomly determined. A random number can be appropriately used. For example, a random number generator (not shown) is provided to the microcomputer 2A, and a sample si is extracted whose sample number is the generated random number. Alternatively, the sample number may be determined by a random number generation program executed by the microcomputer 2A.

The minimum number of extracted samples varies according to the target shape to be recognized. The number is two in the case of linear recognition, for example, and five in the case of a quadratic curve. In the present embodiment, the bumper shape of the parked vehicle 20 is approximated by a quadratic curve, and five samples are extracted. The aggregate of individual data points and samples s extracted in this manner is a subset that corresponds conceptually to a data set.

A shape model setting unit 2c then establishes a shape model on the basis of the subset (aggregate of randomly extracted samples s) (shape model setting step; #2 of FIG. 7).

FIG. 5 is a diagram showing the computation of the degree of coincidence between the sample group S and the shape model L (first shape model L1) established from the samples si that were arbitrarily extracted from the sample group S shown in the scatter diagram of FIG. 4. This first shape model L1 is established based on five samples s that include samples s1, s5, s8, s11, and s13. The shape model L1 can easily be computed using a linear calculation that involves a minor computation load. Alternatively, several types of template shapes may be prepared in advance, and the best of the template shapes may be selected to establish the shape model L1.

As shown in FIG. 5, points that are at a prescribed distance in both directions perpendicular to a tangent of the shape model L are connected along the shape model L to form dashed lines B1 and B2. The portion between the dashed lines B1 and B2 is the effective range W.

The degree of coincidence between the sample group S and the established shape model L is then computed in a degree-of-coincidence computation unit 2d. Specifically, the degree of coincidence is calculated according to the degree to which the samples si constituting the sample group S are included in the effective range W established as described above (degree-of-coincidence computation step; #3 of FIG. 7).

Except for the outlier samples s2, s7, and s10, all of the samples s are included in the effective range W with respect to the first shape model L1 shown in FIG. 5. Accordingly, the degree of coincidence with respect to the sample group S of the first shape model L1 is 77% (10/13). In other words, agreement (consensus) with the first shape model L1 at a high rate of approval (77%) can be obtained from the samples s constituting the sample group S.

A determination is then made in a main computation unit 2e as to whether the degree of coincidence exceeds a prescribed threshold value (determination step; #4 of FIG. 7). When the threshold value is exceeded, the shape model (first shape model L1) established from the extracted subset is certified as the recognition result (certification step; #5 of FIG. 7). Specifically, the first shape model L1 is identified as the profile shape. For example, in such a case as when the threshold value is set to 75%, the first shape model L1 is identified as the profile shape. When the threshold value is not exceeded, the process returns to routine #1 in the flowchart of FIG. 7, other samples s are again extracted to form a new subset, and the same processing is performed. In such a case as when the threshold value is not exceeded even when routines #1 through #4 are executed a plurality of times, a determination is made that the target object (parked vehicle 20 or the like) is not present. The number of times the routines are executed may be specified in advance.

In the present embodiment, the total number of samples s constituting the sample group S is set to 13 in order to simplify the description. The threshold value (75%) is also set so as to simplify the description of the present embodiment. Accordingly, the values of the number of samples and the determination threshold of the degree of coincidence do not limit the present invention. For example, when the number of samples is large, the number of inliers increases relative to the number of outliers, and a threshold value higher than that of the abovementioned example may be set.

In the shape model L (second shape model L2) shown in FIG. 6, samples s2, s4, s7, s10, and s13 are extracted as the subset. As described above, samples s2, s7, and s10 are so-called noise samples that are outside the profile shape of the parked vehicle 20. Accordingly, the samples are appropriately designated as outliers from the perspective of the profile shape of the parked vehicle 20. There are therefore a large number of samples s that are outside the effective range W with respect to the second shape model L2 that was established based on the subset that includes samples s2, s7, and s10, as shown in FIG. 6. When the degree of coincidence is computed by the same method used for the first shape model L1, the degree of coincidence is 38% (5/13). In other words, the second shape model L2 does not agree (have consensus) at a high approval rating with the samples s that constitute the sample group S.

In such a case as when the abovementioned two shape models L1 and L2 are extracted, the profile shape resulting from recognition is the first shape model L1. When the first shape model L1 is established, the noise samples s (s2, s7, and s10) are unused. These noise samples are treated as outliers and removed. Specifically, even when data (outliers) other than that of the detection target are introduced in such a small amount of computation as was described above, the noise samples can be removed, and the shape of the object can be consistently recognized.

Besides this type of method, various methods have been proposed in the past for computing a profile shape from samples S. One of these methods is the least-squares method. In the least-squares method, all of the samples s in the data set are used and given equal weight to calculate the shape. The results are affected by the abovementioned outliers (sample s2 and the like), and a different profile shape from the original is recognized. The degree of coincidence with the entire data set can also be reconfirmed after the profile shape is recognized. However, since the least-squares method itself involves a relatively large computation load, the computation load is further increased when shape recognition by the least-squares method is repeated as a result of the reconfirmation.

Another method that is particularly suitable for linear recognition uses a Hough conversion. As is widely known, a Hough conversion utilizes the property by which straight lines in orthogonal coordinates (the XY plane, for example) intersect at a single point in polar coordinates ($\rho$-$\theta$ space). The conversion equation is shown below.

$$\rho = X \cdot \cos \theta + Y \cdot \sin \theta$$

According to the equation above, when the range of $\rho$ or $\theta$ is increased in the polar coordinate space in an attempt to obtain high resolution to facilitate understanding, the amount of computation increases by a commensurate amount. In other words, a large volume of memory is required as the primary storage means, and the number of calculations increases.

Compared to these conventional computations, the method of the present invention for "computing the degree of coincidence of the sample group S with respect to the shape model L established based on samples s that are arbitrarily extracted from a sample group S that constitutes information about the surface shape" involves a small amount of computation and requires a small amount of memory.

(Second Embodiment)

In the description given above, the degree' of coincidence between the shape model L and the sample group S was calculated, and the shape model L was designated as the recognition result when the degree of coincidence exceeded the prescribed threshold value. In other words, the shape model L that initially exceeded the threshold value was used without modification as the recognition result. This configuration is not limiting, and a plurality of shape models L may also be evaluated instead of immediately designating a shape model L as the recognition result solely on the basis of the threshold value being exceeded. A specific procedure is described below.

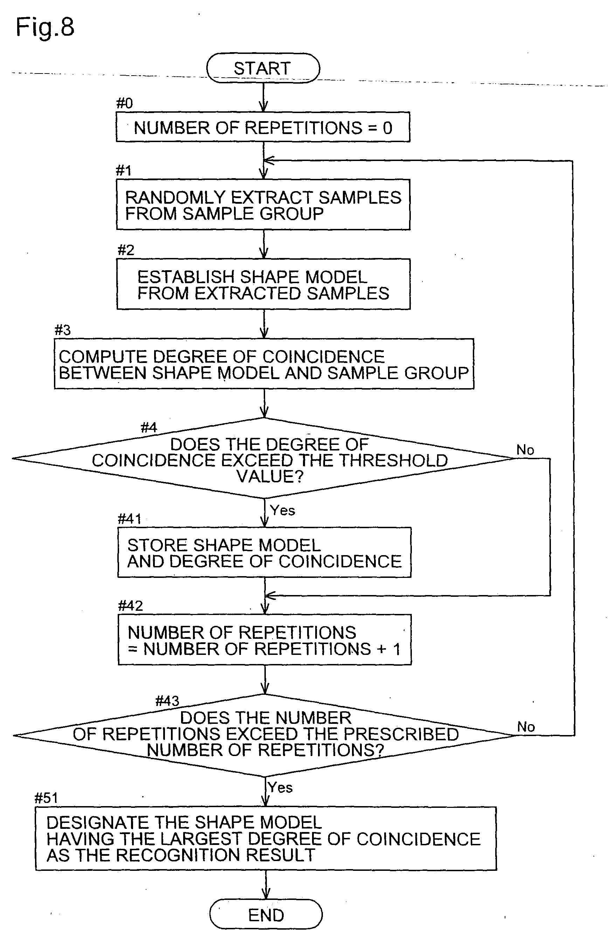

FIG. 8 is a flowchart showing a second method for recognizing a profile shape from the sample group shown in the scatter diagram of FIG. 4. In this second method, subsets are extracted a plurality of times to establish shape models L, and the shape model L having the highest degree of coincidence among the shape models L is designated as the recognition result. The second method will be described hereinafter based on FIG. 8. Routines #1 through 4 are the same as in the flowchart shown in FIG. 7 for the first method, and therefore will not be described.

In this second method, since subsets are repeatedly extracted a plurality of times, the number of repetitions is temporarily stored. At the beginning of the shape recognition step, the temporarily stored number of repetitions is first cleared (initialization step; #0 of FIG. 8). Samples s are randomly extracted hereinafter from the sample group S to create subsets in the sample extraction step (#1) in the same manner as in the first embodiment. Shape models L are then established based on the subsets in the shape model setting step (#2). The degrees of coincidence between the shape models L and the sample group S are then computed in the degree-of-coincidence computation step (#3), and a determination is made in the determination step (#4) as to whether a degree of coincidence exceeds the prescribed threshold value.

When the result of the determination indicates that the threshold value has been exceeded, the previously established shape model L and the degree of coincidence for the shape model L are stored in a temporary storage unit (not shown) (storage step; #41). Since an evaluation for a single shape model L is then completed, the number of repetitions is incremented (counting step; #42). When the result of the determination indicates that the threshold value has not been exceeded, the storage step (#41) is skipped, and the number of repetitions is incremented (#42).

A determination is then made as to whether the number of repetitions has reached (or exceeded) a prescribed number of repetitions (departure determination step; #43). When the prescribed number of repetitions has not been reached, the process returns to the sample extraction step (#1) and proceeds to the subsequent determination step (#4), and a new shape model L is evaluated. When the prescribed number of repetitions has been reached, the shape model L having the highest degree of coincidence among the stored shape models L is selected and designated as the profile shape that is the recognition result (certification step; #51). In such a case as when there is no shape model whose degree of coincidence exceeds the threshold value in the determination step (#4), a determination of no correspondence is made in the certification step (#51).

The first method shown in FIG. 7 and the second method shown in FIG. 8 thus both certify the shape model L established based on the subset as the profile shape. A shape model L that is established based on a small number of samples generally may not reproduce the correct profile shape. However, in the present invention, the degree of coincidence between the shape model L and all of the samples in the sample group S is evaluated. The shape model L may therefore be considered to correctly reproduce (recognize) the profile shape. The fact that a shape model L that is established from a small number of samples constituting a subset is capable of reproducing the profile shape contributes significantly to reducing the amount of computation.

As described above, certifying the unmodified shape model L as the profile shape of the recognition result contributes significantly to reducing the amount of computation. However, this fact does not limit the present invention. The profile shape may be recalculated when the microcomputer 2A or other computation means has surplus capability.

For example, when a shape model L whose degree of coincidence exceeds the threshold value is used as a reference, each of the samples s constituting the sample group S can be defined as an inlier or an outlier. The inliers and outliers are certified in the certification step. The shape is then recalculated using the least-squares method for all of the samples s certified as inliers (recalculation step). As mentioned above, the results obtained from the least-squares method are affected by noise samples s, and it is sometimes impossible to correctly reproduce the shape. However, since the noise samples s can be removed as outliers in this recalculation step, it is possible to reproduce the correct profile shape.

(Third Embodiment)

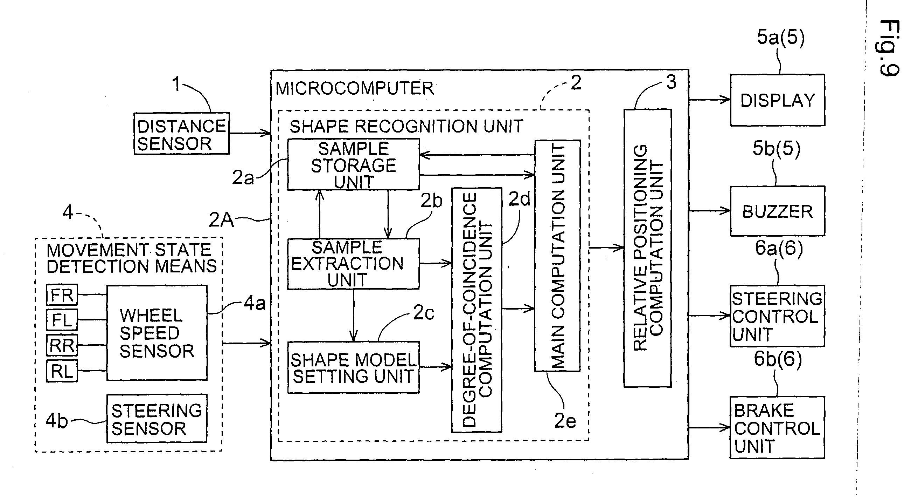

FIG. 9 is a schematic block diagram showing the object recognition apparatus according to a third embodiment of the present invention. As shown in FIG. 9, a relative positioning in the near future can be computed by taking into account the input information from a wheel speed sensor 4a, a steering angle sensor 4b, or another movement state sensor 4 for detecting the movement state of the vehicle 10. In other words, not only is it possible to compute the current positional relationship (see FIG. 10) in which the profile shape E was recognized, but the future positional relationship can also be estimated (predicted).

The wheel speed sensor 4a is provided to each wheel unit (front right FR, front left FL, rear right RR, and rear left RL) of the vehicle 10. This sensor is a rotation sensor that uses a Hall IC, for example. The steering angle sensor 4b detects the rotational angle of the steering wheel or tires of the vehicle 10. Alternatively, the sensor may be a computation apparatus for computing the steering angle on the basis of measurement results (difference in number of rotations or speed of rotation between the left and right wheels) of the aforementioned wheel speed sensors 4a in the wheel units.

The movement state detected by these sensors is taken into account in computing the current and future positional relationship between the profile shape E of the parked vehicle 20 and the vehicle 10. The travel direction is estimated by the rudder angle sensor 4b, and the travel speed is estimated by the wheel speed sensor 4a. The expected trajectory of the vehicle 10, or the positional relationship between the vehicle 10 and the profile shape E of the parked vehicle 20 after several seconds is then computed.

FIG. 11 shows an example of the positional relationship between the vehicle 10 and the profile shape E of the parked vehicle 20. The reference numeral 10A indicates the position of the vehicle 10 in the near future. According to the movement trajectory in this example, a portion of the vehicle 10 and the profile shape E of the parked vehicle 20 interfere with each other. Interference with the profile shape E can be considered to indicate that the vehicle 10 and the parked vehicle 20 may come in contact with each other.

As described above, this relative positioning or the trajectory can be reported via a display 5a, a buzzer 5b, a voice guide, or another reporting means 5. As shown in FIG. 11, a warning or a report urging caution can be issued in such cases as when the profile shape E and the movement trajectory interfere with each other. Furthermore, interference can be prevented by a steering control unit 6a, a brake control unit 6b, or another movement control means 6. In other words, the movement direction can be changed by the steering control unit 6a, and the speed can be reduced by the brake control unit 6b. It is thereby possible to prevent future interference, i.e., contact between the vehicle 10 and the parked vehicle 20.

(Other Embodiments)

In the above description, a distance sensor 1 for detecting information about the surface shape of a parked vehicle 20 in conjunction with the movement of a vehicle 10 such as the one shown in FIG. 1 was described as an example of the object detection means. However, the object recognition apparatus of the present invention is not limited by this configuration. The distance sensor 1 may output information about the surface shape without consideration for the movement of the vehicle 10, and a selection may be made for each movement distance and elapsed time in the information processing of a subsequent step. A scanning means may also be provided for scanning a wide-angle area with respect to the parked vehicle 20 without consideration for the movement of the vehicle 10, and information about the surface shape may be detected based on the obtained scanning information. Specifically, the sensor is not limited to a point sensor such as the distance sensor 1, and it is also possible to use a one-dimensional sensor, a two-dimensional sensor, a three-dimensional sensor, or another sensor capable of obtaining a signal (information about the surface shape) that reflects the shape of the object.

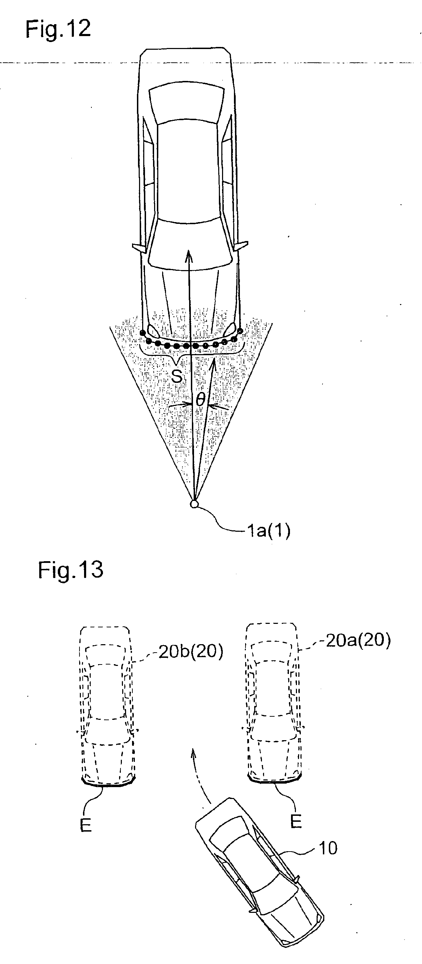

FIG. 12 shows an example of a case in which a one-dimensional sensor is used as the object detection means according to the present invention. A scanning laser sensor is used herein as an example of a one-dimensional sensor. As shown in FIG. 12, the object (parked vehicle 20) is scanned in a radial pattern from the sensor position (position of the scanning means 1a). A distance distribution can be measured using the laser beam reflection from each position on the object. When the azimuth $\theta$ at the time the laser beam is emitted is detected by an encoder or the like, it is possible to obtain the same information about the surface shape as the information shown in FIG. 3. Information about the surface shape can then be mapped onto XY orthogonal coordinates.

Examples of other sensors that may be used as the one-dimensional sensor include ultrasonic radar, optical radar, radio wave radar, triangulation rangefinders, and other sensors.

Scanning radar that is capable of horizontal/vertical scanning is an example of a two-dimensional sensor. The use of this scanning radar makes it possible to obtain information relating to the shape of the target object in the horizontal and vertical directions. Well known two-dimensional sensors also include cameras and other image input means that use a CCD (Charge Coupled Device) or a CIS (CMOS Image Sensor). Contour information, intersection information, and various other types of characteristic quantities may be extracted from the image data obtained from the camera in order to obtain information relating to the surface shape.

The same principle also applies to three-dimensional sensors; e.g., information relating to the shape may be obtained using image data from stereo imagery and the like.

(Other Applications)

In the embodiments of the present invention described above, a parked vehicle 20 was described as the object, and the method, apparatus, and additional characteristics of the method and apparatus for recognizing the profile shape of the parked vehicle 20 were described. The "object" is not limited to a parked vehicle, a building, or another obstacle, and may correspond to the travel lanes of a road, stop lines, parking spaces, and the like. Specifically, the object to be recognized is also not limited to the profile shape of a three-dimensional body, and the shape of a planar pattern may also be recognized.

The present invention may also be applied to a case such as the one shown in FIG. 13 in which a vehicle is backing into a parking space between vehicles 20a and 20b, and not only to the case in which the vehicle 10 is traveling forward as shown in FIGS. 10 and 11. Of course, the present invention also applies to a so-called switchback situation in which the vehicle travels backward as shown in FIG. 13 after traveling forward as shown in FIG. 1. In this case, the vehicle can travel between both parked vehicles 20a and 20b after the profile shape E of the parked vehicles is positively recognized.

## Industrial Applicability

The present invention can be applied to a travel assistance apparatus, a parking assistance apparatus, or another apparatus in an automobile. The present invention may also be applied to a movement assistance apparatus, a stopping assistance apparatus, or another apparatus of a robot.

## BRIEF DESCRIPTION OF THE DRAWINGS

FIG. 1 is a diagram showing an example of a case in which a vehicle in which the object recognition apparatus of the present invention is mounted recognizes another vehicle;

FIG. 2 is a schematic block diagram showing the object recognition apparatus according to a first embodiment of the present invention;

FIG. 3 is a diagram showing the results of measuring information about the surface shape of the parked vehicle shown in FIG. 1;

FIG. 4 is a scatter diagram in which the measurement results shown in FIG. 3 are mapped onto two-dimensional orthogonal coordinates;

FIG. 5 is a diagram showing the computation of the degree of coincidence between a sample group and a first shape model established from samples that were arbitrarily extracted from the sample group shown in the scatter diagram of FIG. 4;

FIG. 6 is a diagram showing the computation of the degree of coincidence between a sample group and a second shape model established from samples that were arbitrarily extracted from the sample group shown in the scatter diagram of FIG. 4;

FIG. 7 is a flowchart showing the first method (first embodiment) for recognizing the profile shape from the sample group shown in the scatter diagram of FIG. 4;

FIG. 8 is a flowchart showing the second method (second embodiment) for recognizing the profile shape from the sample group shown in the scatter diagram of FIG. 4;

FIG. 9 is a schematic block diagram showing the object recognition apparatus according to the third embodiment of the present invention;

FIG. 10 is a diagram showing an example of the positional relationship between the vehicle in which the object recognition apparatus is mounted and the profile shape of another vehicle, computed by the relative positioning computation unit shown in FIGS. 2 and 9;

FIG. 11 is a diagram showing an example (third embodiment) of the positional relationship between the vehicle in which the object recognition apparatus is mounted and the profile shape of another vehicle, computed by the relative positioning computation unit shown in FIG. 9;

FIG. 12 is a diagram showing an example (other embodiment) of a case in which a one-dimensional sensor is used as the object detection means according to the present invention; and

FIG. 13 is a diagram showing another example (other application) of the positional relationship between the vehicle in which the object recognition apparatus is mounted and the profile shape of another vehicle, computed by the relative positioning computation unit shown in FIG. 9.

[KEY]

| 1 | distance sensor (object detection means) |
|---|---|
| 2 | shape recognition unit (shape recognition means) |
| 2A | microcomputer |
| 3 | relative positioning computation unit (relative positioning computation means) |
| 5 | reporting means |
| 5a | display |
| 5b | buzzer |
| S | sample group |
| s | sample |

## Claims

**1.** An object recognition apparatus for recognizing an object in a periphery of a moving body, said object recognition apparatus comprising:

object detection means for detecting information about the surface shape of said object;

shape recognition means for computing a degree of coincidence of a sample group with respect to a shape model that is determined on the basis of a sample arbitrarily extracted from a sample group composed of said information about the surface shape, and recognizing a profile shape of said object;

relative positioning computation means for computing a positional relationship between said moving body and said object on the basis of detection and recognition results of said object detection means and said shape recognition means; and

reporting means for reporting said positional relationship using a sound or a display on the basis of computation results of the relative positioning computation means.

2. The object recognition apparatus according to claim 1, wherein said object detection means detects said information about the surface shape on the basis of a distance between said moving body and a surface of said object.

3. The object recognition apparatus according to claim 2, wherein said information about the surface shape is obtained in discrete fashion in conformity with an external shape of said object.

4. The object recognition apparatus according to claim 1, wherein a number of said samples that is in accordance with a target shape to be recognized is arbitrarily extracted from said sample group constituting said information about the surface shape.

5. The object recognition apparatus according to claim 4, wherein said target shape is a shape of a vehicle bumper approximated by a quadratic curve, and five of said samples are arbitrarily extracted.

6. The object recognition apparatus according to claim 1, wherein
a space between two curves that link points that are separated by a prescribed distance in both directions orthogonal to a tangent line of said shape model is defined as an effective range; and
said shape recognition means computes said degree of coincidence using a relationship between a number of said samples included in said effective range and a total number of samples in said sample group.

7. The object recognition apparatus according to claim 1, wherein
said shape recognition means extracts said arbitrary sample from said sample group a prescribed number of times and computes said degree of coincidence with respect to each said determined shape model; and
after extraction is repeated said prescribed number of times, said shape recognition means recognizes said shape model having a maximum said degree of coincidence as a profile shape of said object among said shape models for which a prescribed threshold value is exceeded.

8. The object recognition apparatus according to claim 7, wherein said shape recognition means first recognizes said shape model having said degree of coincidence that exceeds said prescribed threshold value as a profile shape of said object without consideration for said prescribed number of times.

9. The object recognition apparatus according to claim 1, wherein
said relative positioning computation means computes said positional relationship on the basis of detection results of movement state detection means for detecting a movement state of said moving body; and
determination means are provided for determining a degree of approach of said moving body and said object on the basis of the positional relationship.

10. The object recognition apparatus according to claim 9, further comprising movement control means for controlling one or both parameters selected from a movement speed and a rotation direction of said moving body on the basis of said degree of approach determined by said determination means.

11. The object recognition apparatus according to claim 1, wherein said object detection means detects said information about the surface shape of said object in conjunction with movement of said moving body.

12. The object recognition apparatus according to claim 1, wherein
said object detection means comprises scanning means for scanning a wide-angle area in relation to said object without consideration for movement of said moving body; and
said information about the surface shape of said object is detected based on obtained scanning information.

Fig.1

Fig.2

Fig.3

Fig.4

Fig.5

Fig.6

# Fig.7

```
        ( START )
           │
           ▼
#1  ┌─────────────────────────────┐
    │ RANDOMLY EXTRACT SAMPLES     │
    │ FROM SAMPLE GROUP            │
    └─────────────────────────────┘
           │
           ▼
#2  ┌─────────────────────────────┐
    │ ESTABLISH SHAPE MODEL        │
    │ FROM EXTRACTED SAMPLES       │
    └─────────────────────────────┘
           │
           ▼
#3  ┌─────────────────────────────────────┐
    │ COMPUTE DEGREE OF COINCIDENCE        │
    │ BETWEEN SHAPE MODEL AND SAMPLE GROUP │
    └─────────────────────────────────────┘
           │
           ▼
#4      DOES THE DEGREE OF COINCIDENCE          No
        EXCEED THE THRESHOLD VALUE?
           │
           │ Yes
           ▼
#5  ┌─────────────────────────────────┐
    │ DESIGNATE ESTABLISHED SHAPE MODEL │
    │ AS RECOGNITION RESULT             │
    └─────────────────────────────────┘
           │
           ▼
        ( END )
```

14

## Fig.8

```
                    ( START )
        #0              │
      ┌─────────────────▼─────────────────┐
      │    NUMBER OF REPETITIONS = 0       │
      └─────────────────┬─────────────────┘
        #1              ▼◄──────────────────────────────┐
      ┌───────────────────────────────────┐             │
      │    RANDOMLY EXTRACT SAMPLES        │             │
      │    FROM SAMPLE GROUP               │             │
      └─────────────────┬─────────────────┘             │
        #2              ▼                                │
      ┌───────────────────────────────────┐             │
      │    ESTABLISH SHAPE MODEL           │             │
      │    FROM EXTRACTED SAMPLES          │             │
      └─────────────────┬─────────────────┘             │
    #3                  ▼                                │
  ┌─────────────────────────────────────────┐           │
  │ COMPUTE DEGREE OF COINCIDENCE            │           │
  │ BETWEEN SHAPE MODEL AND SAMPLE GROUP     │           │
  └─────────────────────┬───────────────────┘           │
              #4        ▼                                │
            ╱ DOES THE DEGREE OF  ╲          No          │
          ◄  COINCIDENCE EXCEED THE THRESHOLD ──────────►│
            ╲      VALUE?         ╱                       │
                      │Yes                               │
        #41           ▼                                  │
      ┌───────────────────────────────────┐             │
      │   STORE SHAPE MODEL                │             │
      │   AND DEGREE OF COINCIDENCE        │             │
      └─────────────────┬─────────────────┘             │
        #42             ▼◄────────────────────────────────
      ┌───────────────────────────────────┐
      │   NUMBER OF REPETITIONS            │
      │   = NUMBER OF REPETITIONS + 1      │
      └─────────────────┬─────────────────┘
              #43       ▼
            ╱ DOES THE NUMBER ╲             No
          ◄ OF REPETITIONS EXCEED THE PRESCRIBED ────────►
            ╲ NUMBER OF REPETITIONS? ╱
                      │Yes
    #51               ▼
  ┌─────────────────────────────────────────────┐
  │ DESIGNATE THE SHAPE MODEL                    │
  │ HAVING THE LARGEST DEGREE OF COINCIDENCE     │
  │ AS THE RECOGNITION RESULT                    │
  └─────────────────────┬───────────────────────┘
                        ▼
                    ( END )
```

Fig.9

EP 1 852 713 A1

MICROCOMPUTER

DISTANCE SENSOR

1

2

SHAPE RECOGNITION UNIT

SAMPLE STORAGE UNIT

2a

2A

2b

SAMPLE EXTRACTION UNIT

SHAPE MODEL SETTING UNIT

2c

DEGREE-OF-COINCIDENCE COMPUTATION UNIT

2d

MAIN COMPUTATION UNIT

2e

RELATIVE POSITIONING COMPUTATION UNIT

3

DISPLAY

5a(5)

BUZZER

5b(5)

STEERING CONTROL UNIT

6a(6)

BRAKE CONTROL UNIT

6b(6)

MOVEMENT STATE DETECTION MEANS

4

FR

FL

RR

RL

WHEEL SPEED SENSOR

4a

STEERING SENSOR

4b

16

Fig.10

Fig.11

Fig.12

Fig.13

## INTERNATIONAL SEARCH REPORT

| | International application No. |
|---|---|
| | PCT/JP2006/303166 |

A. CLASSIFICATION OF SUBJECT MATTER
*G01S13/93*(2006.01), *B60R21/00*(2006.01), *G01B21/20*(2006.01)

According to International Patent Classification (IPC) or to both national classification and IPC

B. FIELDS SEARCHED

Minimum documentation searched (classification system followed by classification symbols)
*G01S7/00-7/64*(2006.01), *G01S13/00-17/95*(2006.01), *B60R21/00*(2006.01), *G01B21/20*(2006.01)

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2006 |
| Kokai Jitsuyo Shinan Koho | 1971-2006 | Toroku Jitsuyo Shinan Koho | 1994-2006 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y<br>A | JP 2002-228734 A (Nissan Motor Co., Ltd.),<br>14 August, 2002 (14.08.02),<br>Par. Nos. [0022] to [0052]; Figs. 5, 9<br>(Family: none) | 1-4,6-12<br>5 |
| Y<br>A | JP 2004-118757 A (Atsushi SATO),<br>15 April, 2004 (15.04.04),<br>Par. Nos. [0003] to [0010], [0028] to [0030];<br>Fig. 5<br>(Family: none) | 1-4,6-12<br>5 |
| A | JP 2002-243857 A (Nissan Motor Co., Ltd.),<br>28 August, 2002 (28.08.02),<br>Par. Nos. [0010] to [0037]; Figs. 3 to 6<br>(Family: none) | 1-12 |

☒ Further documents are listed in the continuation of Box C.  ☐ See patent family annex.

| | | |
|---|---|---|
| * | Special categories of cited documents: | |
| "A" | document defining the general state of the art which is not considered to be of particular relevance | "T" later document published after the international filing date or priority date and not in conflict with the application but cited to understand the principle or theory underlying the invention |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| 13 March, 2006 (13.03.06) | 20 March, 2006 (20.03.06) |

| Name and mailing address of the ISA/<br>Japanese Patent Office | Authorized officer |
|---|---|
| Facsimile No. | Telephone No. |

Form PCT/ISA/210 (second sheet) (April 2005)

**INTERNATIONAL SEARCH REPORT**

| International application No. |
| --- |
| PCT/JP2006/303166 |

C (Continuation).    DOCUMENTS CONSIDERED TO BE RELEVANT

| Category* | Citation of document, with indication, where appropriate, of the relevant passages | Relevant to claim No. |
| --- | --- | --- |
| A | JP 7-248382 A  (Nissan Motor Co., Ltd.), 26 September, 1995 (26.09.95), Par. Nos. [0016] to [0073] (Family: none) | 1-12 |
| A | JP 2003-271975 A  (Sony Corp.), 26 September, 2003 (26.09.03), Par. Nos. [0043] to [0122] (Family: none) | 1-12 |

Form PCT/ISA/210 (continuation of second sheet) (April 2005)

**EP 1 852 713 A1**

## REFERENCES CITED IN THE DESCRIPTION

**Patent documents cited in the description**

- JP 2003194938 A